# EUROPEAN PATENT APPLICATION

(11) **EP 4 664 643 A1**
(43) Date of publication of application: **17.12.2025**
(21) Application number: 23961158.5
(22) Date of filing: 14.12.2023
(51) Int. Cl.: H01M 50/30, H01M 50/342, H01M 50/103, H01M 4/13

(54) **BATTERY CELL, BATTERY AND ELECTRIC DEVICE**

(71) Applicant: Contemporary Amperex Technology Co., Limited, Ningde, Fujian 352100 (CN)
(72) Inventor: ZHENG, Donglai, Ningde, Fujian 352100 (CN); SHI, Dongyang, Ningde, Fujian 352100 (CN); MA, Hao, Ningde, Fujian 352100 (CN)
(74) Representative: Kraus & Lederer PartGmbB
(86) International application number: PCT/CN2023/138887
(87) International publication number: WO 2025/123298

(57) **Abstract**

Disclosed in the present application are a battery cell, a battery and an electric device. The battery cell comprises: a case, the case comprising a first wall portion, a second wall portion and a third wall portion; a pressure relief mechanism, the pressure relief mechanism being arranged at the first wall portion; and an electrode assembly, which is accommodated in the case, wherein the electrode assembly comprises at least one negative electrode sheet, an active material layer is formed on at least one side of the negative electrode sheet, and in a second direction, the first wall portion is arranged facing an edge of the negative electrode sheet; in the second direction, the minimum distance between the pressure relief mechanism and an edge of the active material layer is D, and 3 mm≤D≤15 mm; on the basis of the total mass of the active material layer, the mass proportion of an active material is S, and 0.5%≤S≤25%; and in a first direction, the minimum distance between an edge of the pressure relief mechanism and an outer surface of the second wall portion or an outer surface of the third wall portion is d, and 3 mm≤d≤20 mm.

## Description

### TECHNICAL FIELD

The present application relates to the field of batteries, and in particular, to a battery cell, a battery, and an electric device.

### BACKGROUND

Energy conservation and emission reduction are the key to sustainable development of the automobile industry. Electric vehicles have become an important part of the sustainable development of the automobile industry due to their advantages in energy conservation and environmental protection. For electric vehicles, the battery technology is an important factor in their development.

In order to ensure the safety performance of the battery cell, a pressure relief mechanism is generally arranged on the battery cell. The pressure relief mechanism is configured to relieve the pressure inside the battery cell when the battery cell satisfies a predetermined condition. During use of the battery cell in charging and discharging, the electrode assembly may expand and deform, causing the housing accommodating the electrode assembly to swell and deform as well. The housing exerts a tensile force on the pressure relief mechanism, which makes the pressure relief mechanism easily damaged, reducing the reliability of the battery cell.

### SUMMARY

In view of the technical problems in the background section, the present application provides a battery cell, which can reduce the tension on a pressure relief mechanism caused by a housing of the battery cell and reduce the probability of cracking of the pressure relief mechanism.

A first aspect of the present application provides a battery cell. The battery cell includes: a housing, where the housing includes a first wall part, a second wall part, and a third wall part, the second wall part and the third wall part are arranged opposite to each other in a first direction, and two ends of the first wall part in the first direction are respectively connected to the second wall part and the third wall part; a pressure relief mechanism, where the pressure relief mechanism is arranged on the first wall part, and the pressure relief mechanism is configured to be able to relieve the pressure inside the battery cell; and an electrode assembly accommodated in the housing, where the electrode assembly includes at least one negative electrode plate, an active material layer is formed on at least one side of the negative electrode plate, and the active material layer includes an active material. In a second direction, the first wall part is arranged facing the edge of the negative electrode plate, and the second direction is the thickness direction of the first wall part and is perpendicular to the first direction; in the second direction, the minimum distance between the pressure relief mechanism and the edge of the active material layer is D, and 3 mm ≤ D ≤ 15 mm; based on the total mass of the active material layer, the mass proportion of the active material is S, and 0.5% ≤ S ≤ 25%; in the first direction, the minimum distance between the edge of the pressure relief mechanism and the outer surface of the second wall part or the outer surface of the third wall part is d, and 3 mm ≤ d ≤ 20 mm.

For the battery cell proposed in the present application, the values of D, S, and d may be adjusted according to each other. That is, the minimum distance D between the pressure relief mechanism and the edge of the active material layer and the minimum distance d between the edge of the pressure relief mechanism and the outer surface of the second wall part or the outer surface of the third wall part may be adjusted based on the mass proportion S of the active material in the negative electrode active material layer; or the mass proportion S of the active material in the negative electrode active material layer and the minimum distance d between the edge of the pressure relief mechanism and the outer surface of the second wall part or the outer surface of the third wall part may be adjusted based on the minimum distance D between the pressure relief mechanism and the edge of the active material layer; or the mass proportion S of the active material in the negative electrode active material layer and the minimum distance D between the pressure relief mechanism and the edge of the active material layer may be adjusted based on the minimum distance d between the edge of the pressure relief mechanism and the outer surface of the second wall part or the outer surface of the third wall part. Thus, the energy density of the battery is increased, and at the same time, the tension on the first wall part due to the deformation of the electrode assembly is reduced, and the received tensile force and the deformation amount of the second wall part or the third wall part due to the expansion of the electrode assembly are reduced, thereby reducing the probability of tension-induced rupture at the pressure relief mechanism, reducing the probability of liquid leakage at the pressure relief mechanism, and improving the reliability of the battery cell.

According to some embodiments of the present application, 3 mm ≤ D ≤ 10 mm, and 5% ≤ S ≤ 15%. Thus, the energy density of the battery is increased, and at the same time, the expansion deformation of the electrode assembly is reduced, and the tension on the first wall part due to the deformation of the electrode assembly is reduced, thereby reducing the probability of tension-induced rupture at the pressure relief mechanism, reducing the probability of liquid leakage at the pressure relief mechanism, and improving the reliability of the battery cell.

According to some embodiments of the present application, D/S > 20 mm. Thus, S may be adjusted according to D or D may be adjusted according to S, such that the energy density of the battery is increased, and at the same time, the expansion deformation of the electrode assembly is reduced, and the tension on the first wall part due to the deformation of the electrode assembly is reduced, thereby reducing the probability of tension-induced rupture at the pressure relief mechanism, reducing the probability of liquid leakage at the pressure relief mechanism, and improving the reliability of the battery cell.

According to some embodiments of the present application, 2 mm ≤ D ≤ 10 mm, and 5 mm ≤ d ≤ 15 mm. Thus, the tension on the first wall part due to the expansion deformation of the electrode assembly is reduced, and the tension on the first wall part caused by the second wall part or the third wall part is reduced, thereby reducing the probability of tension-induced rupture at the pressure relief mechanism, reducing the probability of liquid leakage at the pressure relief mechanism, and improving the reliability of the battery cell.

According to some embodiments of the present application, 10 mm² ≤ D × d ≤ 150 mm². Thus, d may be adjusted according to D or D may be adjusted according to d, such that the tension on the first wall part due to the expansion deformation of the electrode assembly is reduced, and the tension on the first wall part caused by the second wall part or the third wall part is reduced, thereby reducing the probability of tension-induced rupture at the pressure relief mechanism, reducing the probability of liquid leakage at the pressure relief mechanism, and improving the reliability of the battery cell.

According to some embodiments of the present application, the active material includes an expandable element, and the expandable element includes at least one of silicon and graphite. Thus, the energy density of the battery is increased.

According to some embodiments of the present application, the pressure relief mechanism is integrally formed with the first wall part. Thus, by allowing the pressure relief mechanism to be integrally formed with the first wall part, the reliability of the pressure relief mechanism can be improved, the process of connecting the pressure relief mechanism to the first wall part is omitted, and the production and manufacturing cost of the battery cell can be reduced.

According to some embodiments of the present application, the first wall part includes a weakened zone and a non-weakened zone, the weakened zone is arranged along the edge of the pressure relief mechanism and connects the pressure relief mechanism and the non-weakened zone, and the weakened zone is configured to crack when the pressure of the battery cell is relieved. Thus, when the pressure of the battery cell is relieved, the first wall part may crack at the weakened zone, and the pressure relief mechanism may be opened by taking the weakened zone as a boundary. This provides a relatively large pressure relief area, allowing the discharge medium inside the housing to be discharged quickly.

According to some embodiments of the present application, the first wall part is provided with a score groove, and the weakened zone is formed in the first wall part at the area where the score groove is provided. Thus, the weakened zone is formed by providing a score groove on the first wall part, thereby forming an integrated pressure relief mechanism. The pressure relief mechanism features a simple forming method and low production cost.

According to some embodiments of the present application, the score groove is a groove extending along a closed trajectory. Thus, in the pressure relief process, after the first wall part cracks along the score groove, the pressure relief mechanism can be opened in a manner of separating from the non-weakened zone. This increases the pressure relief area and enhances the pressure relief rate of the battery cell.

According to some embodiments of the present application, the pressure relief mechanism is arranged separately from the first wall part, the first wall part is provided with a through hole, and the pressure relief mechanism is mounted in the through hole. Thus, the pressure relief mechanism is a component independent of the housing, and the pressure relief mechanism and the housing can be produced separately and then assembled. This features low generation difficulty and high efficiency.

According to some embodiments of the present application, in the first direction, the thickness of the battery cell is W₁, the width of the pressure relief mechanism is W₂, and the following condition is satisfied: 0.2 ≤ W₂/W₁ ≤ 0.5. Thus, the tension on the pressure relief mechanism caused by the housing is reduced, and at the same time, the energy density of the battery is increased.

According to some embodiments of the present application, in the first direction, the width of the pressure relief mechanism is W₂; in the third direction, the length of the pressure relief mechanism is W₃, and the following condition is satisfied: 0.5 ≤ W₂/W₃ ≤ 0.8, where the third direction is perpendicular to the second direction. Thus, the pressure relief area is increased, and the pressure relief rate of the battery cell is enhanced.

According to some embodiments of the present application, the housing further includes a fourth wall part. The first wall part, the second wall part, the fourth wall part, and the third wall part are connected end to end in sequence. The fourth wall part and the first wall part are arranged opposite to each other in the second direction. Thus, the housing body including the first wall part, the second wall part, the third wall part, and the fourth wall part is approximately in the shape of a quadrangular prism, and it has a simple structure and is easy to form.

According to some embodiments of the present application, in the second direction, the distance between the first wall part and the fourth wall part is L₁; in the first direction, the distance between the second wall part and the third wall part is L₂, and the following condition is satisfied: L₁ > L₂. Thus, when the electrode assembly expands, the influence of the electrode assembly on the first wall part and the fourth wall part is less than the influence of the electrode assembly on the second wall part and the third wall part. Since the pressure relief mechanism is located in the first wall part, the risk of shielding or damaging the pressure relief mechanism due to the expansion of the electrode assembly can be reduced.

According to some embodiments of the present application, the electrode assembly further includes at least one positive electrode plate, the polarity of the positive electrode plate is opposite to that of the negative electrode plate, and the positive electrode plate and the negative electrode plate are arranged in a stacked manner.

According to some embodiments of the present application, the electrode assembly further includes at least one positive electrode plate, the polarity of the positive electrode plate is opposite to that of the negative electrode plate, and the positive electrode plate and the negative electrode plate are arranged in a winding manner.

According to some embodiments of the present application, the housing includes a housing body and an end cover. At least one side of the housing body is provided with an opening, the end cover is connected to the housing body and is configured to close the opening, and the first wall part is formed in the housing body. Thus, by arranging the pressure relief mechanism on the housing body, the structure of the end cover can be simplified, and at the same time, this enables to shorten the distance between the pressure relief mechanism and the electrode assembly, thereby shortening the path for the discharge medium to flow to the pressure relief mechanism during pressure relief, shortening the time for the discharge medium to reach the pressure relief mechanism, improving the timeliness of pressure relief of the battery cell, and thereby effectively improving the reliability of the battery cell.

According to some embodiments of the present application, two opposite sides of the housing body are each provided with an opening, and two end covers are configured to close the openings on corresponding sides. Thus, by providing two openings on the housing body, the manufacturing and molding of the housing body can be facilitated, and it is also convenient for the electrode assembly to lead out the tabs from both ends, thereby facilitating the separation of the two electrical connection parts and reducing the risk of short circuits of the battery cell.

According to some embodiments of the present application, the end cover is provided with an electrical connection part, and the electrical connection part is electrically connected to the positive electrode plate, or the electrical connection part is electrically connected to the negative electrode plate. Thus, the electric energy of the battery cell is input or output.

According to some embodiments of the present application, the first wall part is configured to support the electrode assembly and is located below the electrode assembly. Thus, the pressure relief mechanism may be arranged at the bottom of the battery cell. The bottom of the battery cell may be provided with an exhaust channel, and the exhaust channel may be in communication with the pressure relief mechanism, so as to discharge the high-temperature and high-pressure smoke into the exhaust channel through the pressure relief mechanism at the bottom when the battery cell is subjected to thermal runaway, thereby discharging the smoke to the outside.

According to some embodiments of the present application, the material of the housing includes at least one of aluminum, nickel-plated carbon steel, stainless steel, a magnesium alloy, a nickel alloy, a copper alloy, and a zirconium alloy. Thus, by using the materials described above, the tensile strength of the housing body can be increased, thereby reducing the deformation of the housing body when the electrode assembly expands, reducing the probability of tension-induced rupture at the housing body or the pressure relief mechanism, reducing the risk of liquid leakage, and improving the reliability of the battery cell.

According to some embodiments of the present application, the positive electrode plate includes a positive electrode current collector and a positive electrode active substance zone arranged on the surface of the positive electrode current collector. The constituent material of the positive electrode current collector includes an aluminum element with a mass percentage greater than or equal to 50%. Thus, compared with using a composite current collector in the related art, the use of the positive electrode current collector described above can reduce the difficulty in manufacturing the positive electrode plate and reduce the manufacturing cost as well.

A second aspect of the present application provides a battery. The battery includes the battery cell provided in the first aspect of the present application.

A third aspect of the present application provides an electric device. The electric device includes the battery provided in the second aspect of the present application.

The additional aspects and the advantages of the present application will be partially provided in the following description, will partially become apparent from the following description, or will be learned through the practice of the present application.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a schematic diagram of a battery cell according to some embodiments of the present application;
FIG. 2 is an exploded view of a battery cell according to some embodiments of the present application;
FIG. 3 is a sectional view of a battery cell according to some embodiments of the present application;
FIG. 4 is a schematic diagram of a first wall part according to some embodiments of the present application;
FIG. 5 is a cross-sectional view taken along line A-A of FIG. 4 according to some embodiments;
FIG. 6 is a schematic diagram of a pressure relief mechanism according to some embodiments of the present application;
FIG. 7 is a schematic diagram of a pressure relief mechanism according to some other embodiments of the present application;
FIG. 8 is a schematic diagram of a pressure relief mechanism according to some other embodiments of the present application;
FIG. 9 is a schematic diagram of an electrode assembly according to some embodiments of the present application;
FIG. 10 is a schematic diagram of an electrode assembly according to some other embodiments of the present application;
FIG. 11 is a schematic diagram of a battery cell according to still some other embodiments of the present application;
FIG. 12 is a schematic diagram of a fifth wall part of a battery cell according to some embodiments of the present application;
FIG. 13 is a schematic diagram of a battery in the related art; and
FIG. 14 is a schematic diagram of an electric device in the related art.

### Description of the reference numerals:

battery 1000, vehicle 2000, case 200, first portion 210, second portion 220,
battery cell 100,
housing 10, housing body 101, end cover 102, first wall part 11, weakened zone 111, non-weakened zone 112, second wall part 12, third wall part 13, fourth wall part 14, fifth wall part 15, sixth wall part 16,
electrode assembly 20, positive electrode plate 21, negative electrode plate 22,
electrical connection part 30,
pressure relief mechanism 40, predetermined pressure relief zone 401, score groove 41, first circular arc segment 411, first straight line segment 412, second straight line segment 413, third straight line segment 414, arc-shaped segment 415, fourth straight line segment 416, fifth straight line segment 417, sixth straight line segment 418, seventh straight line segment 419 (hinge score 419),
patch 60,
first direction F1, second direction F2, third direction F3.

### DETAILED DESCRIPTION

Embodiments of the technical solutions of the present application are described in detail below. The following embodiments are only used to more clearly illustrate the technical solutions of the present application, and therefore, are only exemplary and do not limit the protection scope of the present application.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Battery technology advancement requires consideration of various design factors at the same time, such as energy density, cycle life, discharge capacity, charging and discharging rate, and other performance parameters. In the battery cell, in order to ensure the service life of the battery cell, a pressure relief mechanism may be arranged on the housing of the battery cell. When the battery cell is subjected to thermal runaway, the pressure inside the battery cell is relieved through the pressure relief mechanism, so as to improve the reliability of the battery cell.

During use of the battery cell in charging and discharging, the electrode assembly will expand, causing the housing to swell and deform. The pressure relief mechanism is arranged on the housing, especially some pressure relief mechanisms are arranged on the wall part at a side relatively close to the electrode assembly. The expansion of the electrode assembly will deform the wall part where the pressure relief mechanism is located, thereby exerting a tensile force on the score of the pressure relief mechanism, causing the pressure relief mechanism to be damaged at the score, and thereby resulting in liquid leakage and the like. This will lead to the damage of the pressure relief mechanism when the pressure inside the battery cell does not reach the burst pressure of the pressure relief mechanism, resulting in the failure of the pressure relief mechanism and a relatively low reliability of the pressure relief mechanism. The expansion of the electrode assembly is mainly related to the expansion of the negative electrode plate. The expansion of the negative electrode plate is mainly related to the content of the active material on the negative electrode plate. The higher the content of the active material is, the greater the expansion force of the negative electrode plate during the charging and discharging process is, the greater the deformation of the housing is, the easier it is to exert a tensile force on the pressure relief mechanism and thereby result in cracking of the pressure relief mechanism. The tension on the pressure relief mechanism due to the deformation of the housing is also related to the distance between the negative electrode plate and the wall part provided with the pressure relief mechanism. The smaller the distance is, the larger the tension on the pressure relief mechanism when the housing deforms is, and the easier it is to result in cracking of the pressure relief mechanism. The acting force after the expansion of the electrode assembly is mainly concentrated on the large surface of the housing, and in the thickness direction of the battery cell, the smaller the distance between the edge of the pressure relief mechanism and the large surface of the housing is, the easier it is for the deformation of the housing to exert a tensile force on the pressure relief mechanism and thereby result in cracking of the pressure relief mechanism.

In view of this, the present application provides a battery cell, which includes a housing and an electrode assembly. The electrode assembly includes at least one negative electrode plate, the negative electrode plate is provided with an active material layer, the housing includes a first wall part, a second wall part, and a third wall part, and a pressure relief mechanism is arranged on the first wall part, where in the second direction, the minimum distance between the pressure relief mechanism and the edge of the active material layer is D, and 3 mm ≤ D ≤ 15 mm, thereby reducing the tensile force exerted on the first wall part when the electrode assembly expands, and reducing the probability of tension-induced rupture at the pressure relief mechanism; based on the total mass of the active material layer, the mass proportion of the active material is S, and 0.5% ≤ S ≤ 25%, thereby reducing the expansion deformation of the electrode assembly; in the first direction, the minimum distance between the edge of the pressure relief mechanism and the outer surface of the second wall part or the outer surface of the third wall part is d, and 3 mm ≤ d ≤ 20 mm, thereby reducing the tensile force that the second wall part or the third wall part exerts on the first wall part, reducing the probability of tension-induced rupture at the pressure relief mechanism, reducing the probability of liquid leakage at the pressure relief mechanism, and improving the reliability of the battery cell.

The technical solutions described in the embodiments of the present application are suitable for batteries and electric devices using batteries.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

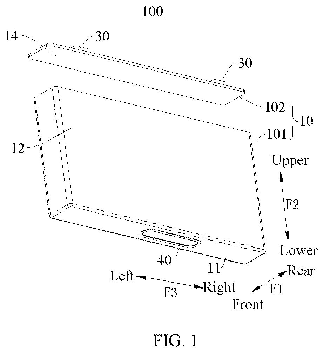

Referring to FIGs. 1-3, a first aspect of the present application provides a battery cell 100. The battery cell 100 includes: a housing 10, where the housing 10 includes a first wall part 11, a second wall part 12, and a third wall part 13, the second wall part 12 and the third wall part 13 are arranged opposite to each other in a first direction F1, and two ends of the first wall part 11 in the first direction F1 are respectively connected to the second wall part 12 and the third wall part 13; a pressure relief mechanism 40, where the pressure relief mechanism 40 is arranged on the first wall part 11, and the pressure relief mechanism 40 is configured to be able to relieve the pressure inside the battery cell 100; and an electrode assembly 20 accommodated in the housing 10, where the electrode assembly 20 includes at least one negative electrode plate 22, an active material layer is formed on at least one side of the negative electrode plate 22, and the active material layer includes an active material. In a second direction F2, the first wall part 11 is arranged facing the edge of the negative electrode plate 22, and the second direction F2 is the thickness direction of the first wall part 11 and is perpendicular to the first direction F1; in the second direction F2, the minimum distance between the pressure relief mechanism 40 and the edge of the active material layer is D, and 3 mm ≤ D ≤ 15 mm; based on the total mass of the active material layer, the mass proportion of the active material is S, and 0.5% ≤ S ≤ 25%; in the first direction F1, the minimum distance between the edge of the pressure relief mechanism 40 and the outer surface of the second wall part 12 or the outer surface of the third wall part 13 is d, and 3 mm ≤ d ≤ 20 mm.

For the battery cell 100 proposed in the present application, the values of D, S, and d may be adjusted according to each other.

As an example, S and d may be adjusted according to the minimum distance D between the pressure relief mechanism 40 and the edge of the active material layer. When the pressure relief mechanism 40 is relatively far away from the edge of the active material layer, the mass proportion S of the active material in the active material layer may be increased, and then the minimum distance d between the edge of the pressure relief mechanism 40 and the outer surface of the second wall part 12 or the outer surface of the third wall part 13 is adjusted according to S.

As an example, D and d may be adjusted according to the mass proportion S of the active material in the active material layer. When the mass proportion of the active material in the active material layer is relatively large, the minimum distance D between the edge of the pressure relief mechanism and the edge of the active material layer may be increased, and then the minimum distance d between the edge of the pressure relief mechanism 40 and the outer surface of the second wall part 12 or the outer surface of the third wall part 13 is adjusted according to D.

As an example, D and S may be adjusted according to the minimum distance d between the edge of the pressure relief mechanism 40 and the outer surface of the second wall part 12 or the outer surface of the third wall part 13. When the minimum distance d between the edge of the pressure relief mechanism 40 and the outer surface of the second wall part 12 or the outer surface of the third wall part 13 is relatively large, the minimum distance D between the pressure relief mechanism 40 and the edge of the active material layer may be decreased, and then the mass proportion S of the active material in the active material layer is adjusted according to D.

Thus, the energy density of the battery is increased, and at the same time, the tension on the first wall part 11 due to the deformation of the electrode assembly 20 is reduced, and the received tensile force and the deformation amount of the second wall part 12 or the third wall part 13 due to the expansion of the electrode assembly 20 are reduced, thereby reducing the probability of tension-induced rupture at the pressure relief mechanism 40, reducing the probability of liquid leakage at the pressure relief mechanism 40, and improving the reliability of the battery cell 100.

In the present application, the minimum distance d means that: distances between different positions of the edge of the pressure relief mechanism 40 and different positions of the outer surface of the second wall part 12 are different and the minimum distance among all the distances is d1, distances between different positions of the edge of the pressure relief mechanism 40 and different positions of the outer surface of the third wall part 13 are different and the minimum distance among all the distances is d2, and the minimum value of d1 and d2 is d in the present application.

According to some embodiments of the present application, 3 mm ≤ D ≤ 15 mm. For example, it may be 3 mm, 5 mm, 7 mm, 9 mm, 11 mm, 13 mm, 15 mm, or the like, or may be in a range formed by any of the foregoing values. According to some specific embodiments of the present application, 3 mm ≤ D ≤ 10 mm. Thus, the tension on the first wall part 11 upon the expansion deformation of the electrode assembly 20 is reduced, thereby reducing the probability of tension-induced rupture at the pressure relief mechanism 40, reducing the probability of liquid leakage at the pressure relief mechanism 40, and improving the reliability of the battery cell 100.

In the present application, when the entire of the negative electrode plate is provided with an active material layer, the minimum distance D between the pressure relief mechanism 40 and the edge of the active material layer is the minimum distance between the edge of the pressure relief mechanism 40 and the edge of the negative electrode plate 22.

In the present application, the minimum distance D between the pressure relief mechanism 40 and the edge of the active material layer may be measured by X-ray.

According to some embodiments of the present application, 0.5% ≤ S ≤ 25%. For example, it may be 0.5%, 5%, 10%, 15%, 20%, 25%, or the like, or may be in a range formed by any of the foregoing values. Thus, by allowing the value of S to be within the above range, the energy density of the battery is increased, and at the same time, the expansion degree of the negative electrode plate 22 is reduced, the expansion deformation of the electrode assembly 20 is reduced, and the received tensile force and the deformation amount of the second wall part 12 or the third wall part 13 due to the expansion of the electrode assembly 20 are reduced, thereby reducing the probability of tension-induced rupture at the pressure relief mechanism 20, reducing the probability of liquid leakage at the pressure relief mechanism 40, and improving the reliability of the battery cell 100. According to some specific embodiments of the present application, 5% ≤ S ≤ 15%.

In the present application, the mass proportion of the active material in the active material layer may be determined by inductively coupled plasma (ICP).

According to some embodiments of the present application, D/S > 20 mm. For example, it may be 20 mm, 50 mm, 100 mm, 200 mm, or the like, or may be in a range formed by any of the foregoing values. Thus, S may be adjusted according to D or D may be adjusted according to S, such that the energy density of the battery is increased, and at the same time, the expansion deformation of the electrode assembly 20 is reduced, and the tension on the first wall part 11 due to the deformation of the electrode assembly 20 is reduced, thereby reducing the probability of tension-induced rupture at the pressure relief mechanism 20, reducing the probability of liquid leakage at the pressure relief mechanism 40, and improving the reliability of the battery cell 100.

According to some embodiments of the present application, 3 mm ≤ d ≤ 20 mm. For example, it may be 3 mm, 5 mm, 7 mm, 9 mm, 11 mm, 13 mm, 15 mm, 17 mm, 19 mm, 20 mm, or the like, or may be in a range formed by any of the foregoing values. Thus, by allowing the value of d to be within the above range, the pressure relief effect of the pressure relief mechanism 40 is improved, and at the same time, the tension on the pressure relief mechanism 40 due to the deformation of the housing 10 is reduced, thereby reducing the probability of tension-induced rupture at the pressure relief mechanism 40. According to some specific embodiments of the present application, 5 mm ≤ d ≤ 15 mm.

In the present application, the minimum distance d between the edge of the pressure relief mechanism 40 and the outer surface of the second wall part 12 or the outer surface of the third wall part 13 may be measured by a steel rule or a flexible rule.

According to some embodiments of the present application, the active material includes an expandable element, and the volume expansion rate of the expandable element is greater than or equal to 15%. For example, it may be 15%, 20%, 25%, 30%, 35%, 40%, or the like, or may be in a range formed by any of the foregoing values. Thus, when the battery is charged and discharged, the housing 10 may deform due to the expansion of the active material, and by allowing the values of D, d, and S to be within the above ranges, the tension on the pressure relief mechanism 40 after the deformation of the housing 10 can be reduced, thereby reducing the probability of tension-induced rupture at the pressure relief mechanism 40. According to some embodiments of the present application, the volume expansion rate of the expandable element is greater than or equal to 25%.

In the present application, a test method for the volume expansion rate of the active material may be confocal microscopy.

According to some embodiments of the present application, the active material includes an expandable element, and the expandable element includes at least one of silicon and graphite. Thus, the energy density of the battery is increased, and at the same time, by allowing the values of D and S to be within the above ranges, the tension on the pressure relief mechanism 40 after the deformation of the housing 10 is reduced, thereby reducing the probability of cracking of the pressure relief mechanism 40. According to some specific embodiments of the present application, the active material includes silicon.

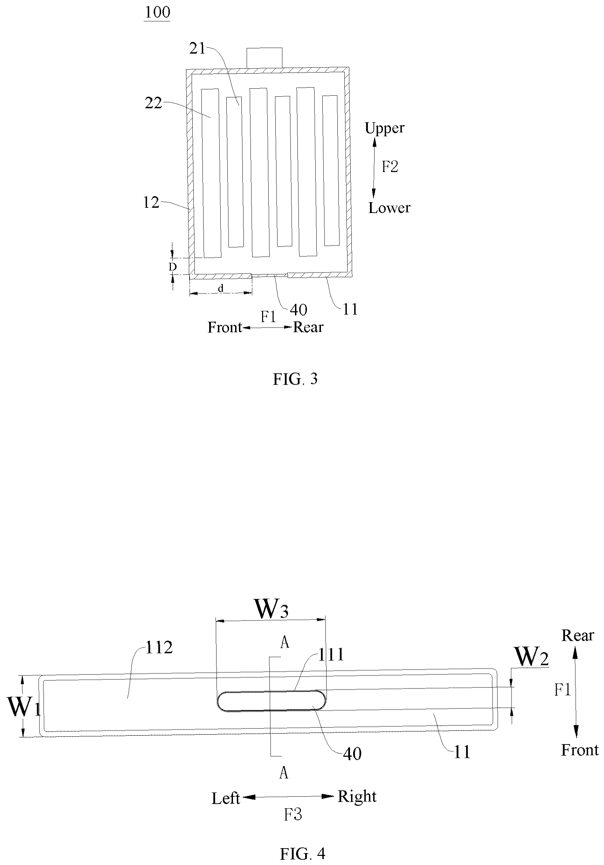

According to some embodiments of the present application, referring to FIG. 4, the pressure relief mechanism 40 is integrally formed with the first wall part 11. By allowing the pressure relief mechanism 40 to be integrally formed with the first wall part 11, the reliability of the pressure relief mechanism 40 can be improved, the process of connecting the pressure relief mechanism 40 to the first wall part 11 is omitted, and the production and manufacturing cost of the battery cell 100 can be reduced.

In some embodiments, referring to FIG. 4, the first wall part 11 includes a weakened zone 111 and a non-weakened zone 112. The weakened zone 111 is arranged along the edge of the pressure relief mechanism 40 and connects the pressure relief mechanism 40 and the non-weakened zone 112, and the weakened zone 111 is configured to crack when the pressure of the battery cell 100 is relieved. Specifically, the weakened zone 111, the non-weakened zone 112, and the pressure relief mechanism 40 are integrally formed. The non-weakened zone 112 is the main body area of the first wall part 11, the weakened zone 111 is an area of the first wall part 11 that is weaker than the non-weakened zone 112, and the strength of the non-weakened zone 112 is greater than the strength of the weakened zone 111. The weakened zone 111 may be a weakened portion of the first wall part 11. For example, the annealing treatment is performed on part of the first wall part 11 to reduce the strength of this area, thereby forming the weakened zone 111. For another example, a groove is provided on the first wall part 11 to form the weakened zone 111 at the area where the groove is located. When the pressure of the battery cell 100 is relieved, the first wall part 11 may crack at the weakened zone 111, and the pressure relief mechanism 40 may be opened by taking the weakened zone 111 as a boundary. This provides a relatively large pressure relief area, allowing the discharge medium inside the housing 10 to be discharged quickly.

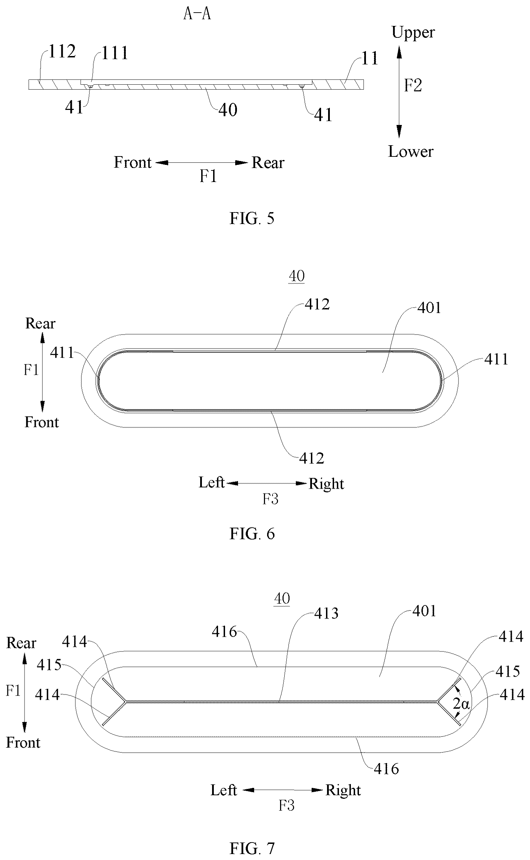

According to some embodiments of the present application, referring to FIG. 5, the first wall part 11 is provided with a score groove 41, and the weakened zone 111 is formed in the first wall part 11 at the area where the score groove 41 is provided. The score groove 41 may be formed in various ways, such as stamping, milling, and laser etching. The score groove 41 extends in the same direction as the weakened zone 111. The score groove 41 may extend along a closed trajectory; the score groove 41 may also extend along a non-closed trajectory. For example, the score groove 41 is a groove extending along a circular arc-shaped trajectory, a U-shaped trajectory, etc. The score groove 41 may be arranged on the inner surface and/or outer surface of the first wall part 11. As an example, in the embodiment illustrated in FIG. 5, the score groove 41 is arranged on the outer surface of the first wall part 11.

The bottom wall of the score groove 41 is the weakened zone 111, and the thickness of the weakened zone 111 is less than the thickness of the non-weakened zone 1112.

According to some embodiments of the present application, referring to FIG. 5, the weakened zone 111 is formed by providing a score groove 41 on the first wall part 11, thereby forming an integrated pressure relief mechanism 40. The pressure relief mechanism 40 features a simple forming method and low production cost.

According to some embodiments of the present application, the score groove 41 is a groove extending along a closed trajectory.

As can be appreciated, the weakened zone 111 extends along a closed trajectory, and the weakened zone 111 defines the pressure relief mechanism 40.

According to some embodiments of the present application, the score groove 41 may be an annular groove, which may be a rectangular annular groove or a circular annular groove. The rectangular annular groove is a groove extending along a rectangular trajectory, and the circular annular groove is a groove extending along a circular trajectory.

In some other embodiments, the score groove 41 may also be of other shapes, and the score groove 41 is a groove extending along the trajectory of a "double-Y" shape, an "I" shape, a " 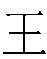 " shape (the shape of Chinese character 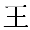 ), etc. In this case, the groove bottom of the score groove 41 forms the pressure relief mechanism 40, such that the pressure relief mechanism 40 is in the form of the above-mentioned corresponding shape, the pressure relief mechanism 40 forms a weakened zone relative to the first wall part 11, and the score groove 41 here may also be understood as the score groove 41. In this case, when the pressure of the battery cell 100 is relieved, the groove bottom of the score groove 41 cracks, the pressure relief mechanism 40 is damaged, and the first wall part 11 may form an opening at the groove bottom of the score groove 41 to achieve pressure relief.

In the pressure relief process, after the first wall part 11 cracks along the score groove 41, the pressure relief mechanism 40 can be opened in a manner of separating from the non-weakened zone 1112. This increases the pressure relief area and enhances the pressure relief rate of the battery cell 10.

In some embodiments, referring to FIG. 6, the score groove 41 includes two first circular arc segments 411 arranged opposite to each other and two first straight line segments 412 arranged in parallel with each other, two ends of each first straight line segment 412 are respectively connected to the two first circular arc segments 411, and the two first straight line segments 412 and the two first circular arc segments 411 form a closed ring-shaped structure. In the second direction F2, the outer edge of the orthographic projection of the ring-shaped structure constitutes the predetermined opening boundary of the predetermined pressure relief zone 401, that is, the predetermined opening boundary is defined by the outer edge of the orthographic projection of the score groove 40 in the second direction F2.

In some embodiments, referring to FIG. 7, the score groove 41 includes a second straight line segment 413 and four third straight line segments 414, and two ends of the second straight line segment 413 are each connected to two third straight line segments 414 arranged at a preset included angle. In the second direction F2, between free ends of orthographic projections of two third straight line segments 414 located at the same end of the second straight line segment 413, an arc-shaped segment 415 is defined with the vertex of the preset included angle as the circle center, and between free ends of orthographic projections of two third straight line segments 414 located at the same side of the second straight line segment 413, a fourth straight line segment 416 is defined. The two arc-shaped segments 415 and the two fourth straight line segments 416 together constitute the predetermined opening boundary of the predetermined pressure relief zone 401, that is, the predetermined opening boundary is defined by connecting lines between multiple end parts of the score groove 40.

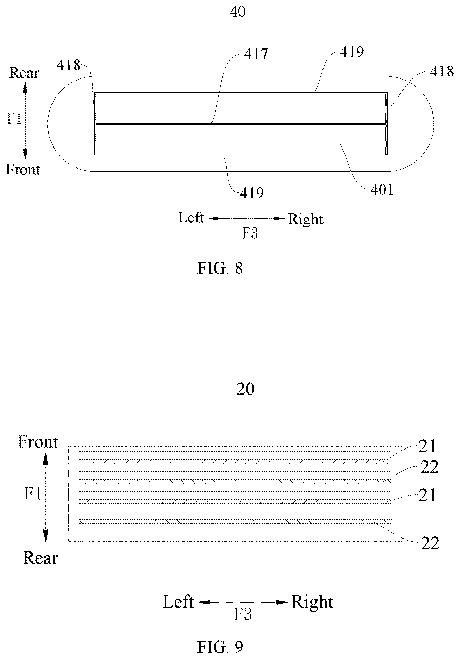

In some embodiments, referring to FIG. 8, the score groove 41 includes a fifth straight line segment 417 and two sixth straight line segments 418. The fifth straight line segment 417 is located between the two sixth straight line segments 418, and end parts of the fifth straight line segment 417 are respectively connected to the middle portions of the corresponding sixth straight line segments 418. Between end parts of the two sixth straight line segments 418 located on the same side of the fifth straight line segment 417, a seventh straight line segment 419 is defined. The outer edges of the orthographic projections of the seventh straight line segments 419 and the sixth straight line segments 418 in the second direction F2 constitute the predetermined opening boundary of the predetermined pressure relief zone 401, that is, the predetermined opening boundary is defined together by the outer edges of the orthographic projections of the connecting lines between multiple end parts of the score groove 40 and a portion of the score groove 40 in the second direction.

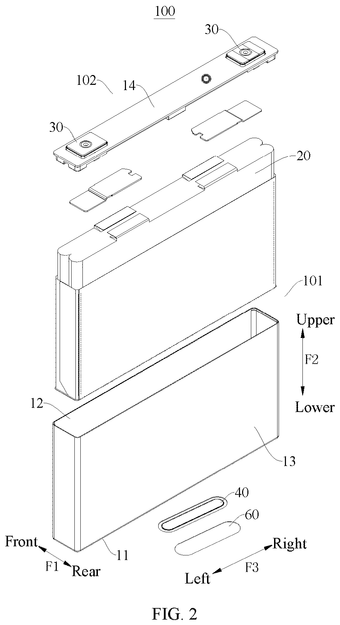

In some embodiments, referring to FIG. 2, a patch 60 may be further provided on the outside of the pressure relief mechanism 40, and the patch 60 cooperates with the housing 10 to protect the pressure relief mechanism 40.

According to some embodiments of the present application, referring to FIGs. 1 and 2, the pressure relief mechanism is arranged separately from the first wall part 11, the first wall part 11 is provided with a through hole, and the pressure relief mechanism 40 is mounted in the through hole.

As shown in FIGs. 1 and 2, the pressure relief mechanism 40 and the housing 10 are two separate components, which are formed separately and then assembled together. Specifically, the pressure relief mechanism 40 may be an anti-explosion sheet, an anti-explosion valve, a safety valve, or other components. The pressure relief mechanism 40 may be mounted on the first wall part 11 by means of bonding, welding, etc. The first wall part 11 is provided with a through hole, and the pressure relief mechanism 40 is mounted in the through hole. When the internal pressure of the battery cell 100 reaches a threshold value, the pressure relief mechanism 40 opens at least part of the through hole, and the discharge medium inside the battery cell 100 is discharged through the through hole to relieve the pressure inside the battery cell 100.

According to some embodiments of the present application, referring to FIG. 4, in the first direction F1, the thickness of the battery cell 10 is W₁, the width of the pressure relief mechanism 40 is W₂, and the following condition is satisfied: 0.2 ≤ W₂/W₁ ≤ 0.5. For example, it may be 0.2, 0.25, 0.3, 0.35, 0.4, 0.45, 0.5, or the like, or may be in a range formed by any of the foregoing values. Thus, the tension on the pressure relief mechanism 40 caused by the housing 10 is reduced, and at the same time, the energy density of the battery is increased.

According to some embodiments of the present application, referring to FIG. 4, in the first direction F1, the width of the pressure relief mechanism 40 is W₂; in the third direction F3, the length of the pressure relief mechanism 40 is W₃, and the following condition is satisfied: 0.5 ≤ W₂/W₃ ≤ 0.8, where the third direction F3 intersects with the second direction F2. For example, it may be 0.5, 0.55, 0.6, 0.65, 0.7, 0.75, 0.8, or the like, or may be in a range formed by any of the foregoing values. Thus, the pressure relief area is increased, and the pressure relief rate of the battery cell 100 is enhanced.

According to some embodiments of the present application, referring to FIG. 9, the battery cell 100 further includes a positive electrode plate 21. The polarity of the positive electrode plate 21 is opposite to that of the negative electrode plate 22. The positive electrode plate 21 and the negative electrode plate 22 are arranged in a stacked manner.

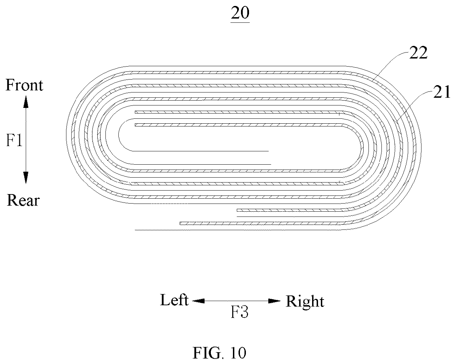

According to some embodiments of the present application, referring to FIG. 10, the battery cell 100 further includes a positive electrode plate 21. The polarity of the positive electrode plate 21 is opposite to that of the negative electrode plate 22. The positive electrode plate 21 and the negative electrode plate 22 are arranged in a winding manner.

According to some embodiments of the present application, as shown in FIGs. 1 and 2, the housing 10 includes a housing body 101 and an end cover 102. At least one side of the housing body 101 is provided with an opening, the end cover 102 is connected to the housing body 101 and is configured to close the opening, and the first wall part 11 is formed in the housing body 101. As shown in FIGs. 1 and 2, the housing body 101 may be a hollow structure with an opening formed at one end, or the housing body 101 may be a hollow structure with openings formed at two opposite ends. The housing body 101 may be in various shapes, such as a prismatic shape.

The end cover 102 is a component that closes the opening of the housing body 101 to isolate the internal environment of the battery cell 100 from the external environment. The end cover 102 and the housing body 101 together define an accommodation space for accommodating the electrode assembly 20, the electrolyte, and other components. The shape of the end cover 102 may be adapted to the shape of the housing 10. For example, the housing body 101 is a rectangular parallelepiped structure, and the end cover 102 is a rectangular plate-shaped structure adapted to the housing 10. For another example, the housing body 101 is a cylindrical structure, and the end cover 102 is a circular plate-shaped structure adapted to the housing body 101. The end cover 102 may also be made of various materials, such as copper, iron, aluminum, steel, aluminum alloy, and plastic. The end cover 102 and the housing body 101 may be made of the same or different materials.

In an embodiment in which an opening is formed at one end of the housing body 101, one end cover 102 may be correspondingly provided. In an embodiment in which openings are respectively formed at two opposite ends of the housing body 101, two end covers 102 may be correspondingly provided. The two end covers 102 respectively close the two openings of the housing body 101, and the two end covers 102 and the housing body 101 together define the accommodation space.

The housing body 101 is provided with a first wall part 11 and a second wall part 12. The pressure relief mechanism 40 is arranged on the housing body 101. The pressure relief mechanism 40 may be integrally formed with the housing body 101, or may be provided separately from the housing body 101. By arranging the pressure relief mechanism 40 on the housing body 101, the structure of the end cover 102 can be simplified, and at the same time, this enables to shorten the distance between the pressure relief mechanism 40 and the main body part of the electrode assembly 20, thereby shortening the path for the discharge medium to flow to the pressure relief mechanism 40 during pressure relief, shortening the time for the discharge medium to reach the pressure relief mechanism 40, improving the timeliness of pressure relief of the battery cell 100, and thereby effectively improving the reliability of the battery cell 100.

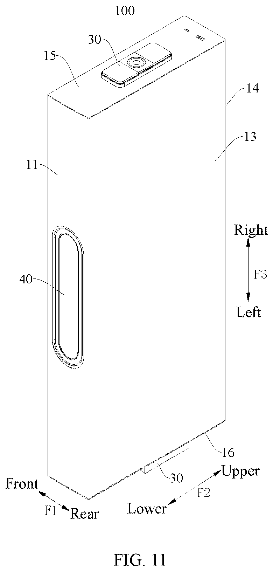

As shown in FIG. 11, in some embodiments, two opposite sides of the housing body 101 are each provided with an opening, and two end covers 102 are configured to close the openings on corresponding sides.

As shown in FIG. 11, in an embodiment in which openings are respectively formed at two opposite ends of the housing body 101, two end covers 102 may be correspondingly provided. The two end covers 102 respectively close the two openings of the housing body 101, and the two end covers 102 and the housing body 101 together define the accommodation space. The first wall part 11 is located on the housing body 101, the pressure relief mechanism 40 is located between the two openings, and each end cover 102 may be provided with one electrical connection part 30.

By providing two openings on the housing body 101, the manufacturing and molding of the housing body 101 can be facilitated, and it is also convenient for the electrode assembly 20 to lead out the tabs from both ends, thereby facilitating the separation of the two electrical connection parts 30 and reducing the risk of short circuits of the battery cell 100.

As shown in FIGs. 1 and 2, in some examples, the end cover 102 is provided with an electrical connection part 30. The electrical connection part 30 is electrically connected to the positive electrode plate 21, or the electrical connection part 30 is electrically connected to the negative electrode plate 22, such that electric energy of the battery cell can be input or output.

The electrical connection part 30 is arranged on the end cover 102. The electrical connection part 30 may be a part of the end cover 102, and the electrical connection part 30 may also be a post terminal mounted on the end cover 102. Generally, two electrical connection parts 30 are provided. One electrical connection part 30 is electrically connected to the tab of the positive electrode plate 21, and the other electrical connection part 30 is electrically connected to the tab of the negative electrode plate 22, so as to input or output electric energy of the battery cell 100. The electrical connection part 30 may be directly connected to the tab. For example, the electrical connection part 30 is directly welded to the tab. The electrical connection part 30 may also be indirectly connected to the tab. For example, the electrical connection part 30 is indirectly connected to the tab through a current collecting member. The current collecting member may be a metal conductor, such as copper, iron, aluminum, steel, or an aluminum alloy.

The electrical connection part 30 and the pressure relief mechanism 40 are located on different sides of the housing 10, that is, the electrical connection part 30 is located on one wall part of the housing 10, and the pressure relief mechanism 40 is located on another wall part of the housing 10. Since the electrical connection part 30 is connected to the tab of the electrode assembly 20, and there is a certain gap between the wall part where the electrical connection part 30 is located and the electrode assembly 20, by arranging the electrical connection part 30 and the pressure relief mechanism 40 on different wall parts of the housing 10, the distance between the pressure relief mechanism 40 and the electrode assembly 20 can be shortened. Thus, when the battery cell 100 is subjected to thermal runaway, most of the discharge medium in the housing 10 can directly flow from the edge of the electrode assembly 20 to the pressure relief mechanism 40, thereby shortening the path for the discharge medium to flow to the pressure relief mechanism 40, and enabling the discharge medium to quickly flow to the pressure relief mechanism 40. As such, the time for the discharge medium to reach the pressure relief mechanism 40 is shortened, the timeliness of pressure relief of the battery cell 100 is improved, and thereby the reliability of the battery cell 100 is effectively improved.

According to some embodiments of the present application, referring to FIG. 11, the housing body 11 further includes a fourth wall part 14. The first wall part 11, the second wall part 12, the fourth wall part 14, and the third wall part 13 are connected end to end in sequence. The fourth wall part 14 and the first wall part 11 are arranged opposite to each other in the second direction.

In some embodiments, referring to FIG. 11, the housing body 101 further includes a fifth wall part 15 and a sixth wall part 16. The first wall part 11 and the fourth wall part 14 are arranged opposite to each other in the second direction (F2), the second wall part 12 and the third wall part 13 are arranged opposite to each other in the first direction (F1), and the fifth wall part 15 and the sixth wall part 16 are arranged opposite to each other in the third direction F3. Thus, the housing body 101 may be approximately in the shape of a quadrangular prism, and it has a simple structure and is easy to form.

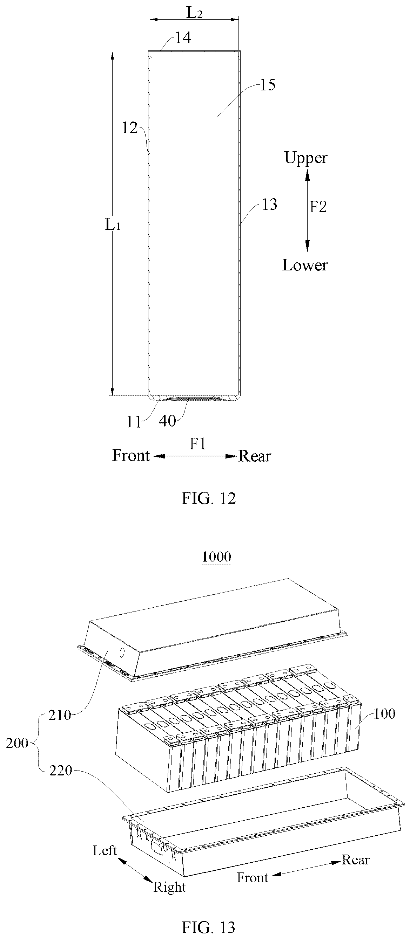

According to some embodiments of the present application, referring to FIG. 12, in the second direction F2, the distance between the first wall part 11 and the fourth wall part 14 is L₁; in the first direction F1, the distance between the second wall part 12 and the third wall part 13 is L₂, and the following condition is satisfied: L₁ > L₂. Thus, when the electrode plate expands, the influence of the negative electrode plate 22 on the first wall part 11 and the fourth wall part 14 is less than the influence of the negative electrode plate 22 on the second wall part 12 and the third wall part 13. Since the pressure relief mechanism 40 is located in the first wall part 11, the probability of shielding or damaging the pressure relief mechanism 40 due to the expansion of the negative electrode plate 22 can be reduced.

As shown in FIGs. 1 and 2, the first wall part 11 is configured to support the electrode assembly 20, and the first wall part 11 is located below the electrode assembly 20. Thus, the pressure relief mechanism 40 may be arranged at the bottom of the battery cell 100. The bottom of the battery cell 100 may be provided with an exhaust channel, and the exhaust channel may be in communication with the pressure relief mechanism 40, so as to discharge the high-temperature and high-pressure smoke into the exhaust channel through the pressure relief mechanism 40 at the bottom when the battery cell 100 is subjected to thermal runaway, thereby discharging the smoke to the outside.

According to some embodiments of the present application, the material of the housing 10 includes at least one of aluminum, nickel-plated carbon steel, stainless steel, a magnesium alloy, a nickel alloy, a copper alloy, and a zirconium alloy.

The material of the housing body 101 of the housing 10 may be nickel-plated carbon steel, such as SPCC; the material of the housing body 101 may also be stainless steel, such as SUS304 or SUS316; the material of the housing body 101 may also be a magnesium alloy, such as AZ31B; the material of the housing body 101 may also be a nickel alloy, such as Inconcel625; the material of the housing body 101 may also be a copper alloy, such as brass; the material of the housing body 101 may also be a zirconium alloy, such as Zr702. Certainly, the material of the housing body 101 may also be a composite material. By using the materials described above, the tensile strength of the wall parts of the housing body 101 can be increased, thereby reducing the deformation of the housing body 101 when the electrode assembly 20 expands, reducing the probability of tension-induced rupture at the housing body 101 or the pressure relief mechanism 40, reducing the risk of liquid leakage, and improving the reliability of the battery cell 100. The end cover 102 and the housing body 101 may be made of the same material, or may be made of different materials.

According to some embodiments of the present application, the positive electrode plate 21 includes a positive electrode current collector and a positive electrode active substance zone arranged on the surface of the positive electrode current collector. The constituent material of the positive electrode current collector includes an aluminum element with a mass percentage greater than or equal to 50%.

That is, the constituent material of the positive electrode current collector may include the aluminum element, and the mass percentage of the aluminum element in the positive electrode current collector is greater than or equal to 50%. Compared with using a composite current collector in the prior art, the use of the positive electrode current collector described above can reduce the difficulty in manufacturing the positive electrode plate 21 and reduce the manufacturing cost as well.

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present application.

The electrode assembly 20 includes a positive electrode, a negative electrode, and a separator. During the charging and discharging process of the battery cell 100, active ions (such as lithium ions) are intercalated and deintercalated back and forth between the positive electrode and the negative electrode. The separator is arranged between the positive electrode and the negative electrode to prevent the positive and negative electrodes from short-circuiting while allowing the passage of active ions.

### [Positive Electrode Plate]

In some embodiments, the positive electrode may be a positive electrode plate. The positive electrode plate includes a positive electrode current collector and a positive electrode active material layer arranged on at least one surface of the positive electrode current collector. The positive electrode active material layer includes the positive electrode active material according to the first aspect of the present application.

As an example, the positive electrode current collector is provided with two surfaces opposite to each other in the thickness direction thereof, and the positive electrode active material layer is arranged on either or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, when the battery is a lithium-ion battery, a positive electrode active material for use in lithium-ion batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.8}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

For example, when the battery is a sodium-ion battery, as an example, the positive electrode active material may include, but is not limited to, at least one of a layered transition metal oxide, a polyanionic compound, and a Prussian blue analog.

Examples of the layered transition metal oxide described above may include:
Na₁₋ₓCuₕFeₖMnₗM¹ₘO_{2-y}, where M¹ is one or more of Li, Be, B, Mg, Al, K, Ca, Ti, Co, Ni, Zn, Ga, Sr, Y, Nb, Mo, In, Sn, and Ba, 0 < x ≤ 0.33, 0 < h ≤ 0.24, 0 ≤ k ≤ 0.32, 0 < 1 ≤ 0.68, 0 ≤ m < 0.1, h + k + 1 + m = 1, and 0 ≤ y < 0.2;
Na_{0.67}Mn_{0.7}Ni_{z}M²_{0.3-z}O₂, where M² is one or more of Li, Mg, Al, Ca, Ti, Fe, Cu, Zn, and Ba, and 0 < z ≤ 0.1;
NaₐLi_{b}Ni_{c}Mn_{d}FeₑO₂, where 0.67 < a ≤ 1, 0 < b < 0.2, 0 < c < 0.3, 0.67 < d + e < 0.8, and b + c + d + e = 1.

Examples of the polyanionic compound described above may include:
A¹_{f}M³_{g}(PO₄)ᵢOⱼX¹₃₋ⱼ, where A¹ is one or more of H, Li, Na, K, and NH₄, M³ is one or more of Ti, Cr, Mn, Fe, Co, Ni, V, Cu, and Zn, X¹ is one or more of F, Cl, and Br, 0 < f ≤ 4, 0 < g ≤ 2, 1 ≤ i ≤ 3, and 0 ≤ j ≤ 2;
NaₙM⁴PO₄X², where M⁴ is one or more of Mn, Fe, Co, Ni, Cu, and Zn, X² is one or more of F, Cl, and Br, and 0 < n ≤ 2;
NaₚM⁵_{q}(SO₄)₃, where M⁵ is one or more of Mn, Fe, Co, Ni, Cu, and Zn, 0 < p ≤ 2, and 0 < q ≤2;
NaₛMnₜFe₃₋ₜ(PO₄)₂(P₂O₇), where 0 < s ≤ 4, and 0 ≤ t ≤ 3; for example, t is 0, 1, 1.5, 2, or 3.

Examples of the Prussian blue analog described above may include:
AᵤM⁶ᵥM⁷(CN)₆]_{w}·xH₂O, where A is one or more of H⁺, NH₄⁺, an alkali metal cation, and an alkaline earth metal cation, M⁶ and M⁷ are each independently one or more of transition metal cations, 0 < u ≤ 2, 0 < v ≤ 1, 0 < w ≤ 1, and 0 < x < 6. For example, A is one or more of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, and Ra²⁺, and M⁶ and M⁷ are each independently cations of one or more transition metal elements of Ti, V, Cr, Mn, Fe, Co, Ni, Cu, Zn, Sn, and W.

The modified compounds of the materials described above may be obtained by doping modification and/or surface-coating modification of the materials.

In some embodiments, the positive electrode active material layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode active material layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

In some embodiments, the negative electrode may be a negative electrode plate. The negative electrode plate includes a negative electrode current collector and a negative electrode active material layer arranged on at least one surface of the negative electrode current collector. The negative electrode active material layer includes a negative electrode active material.

As an example, the negative electrode current collector is provided with two surfaces opposite to each other in the thickness direction thereof, and the negative electrode active material layer is arranged on either or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode active material layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode active material layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Electrolyte]

The electrolyte conducts ions between the positive electrode plate and the negative electrode plate. The present application has no specific restrictions on the type of the electrolyte, which can be selected according to needs.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

### [Separation Film]

In some embodiments, the battery further includes a separation film. The present application does not particularly limit the type of the separation film, and any porous-structure separation film known to have good chemical stability and mechanical stability may be selected and used.

In some embodiments, the separation film may be made of a material selected from at least one of glass fiber, non-woven fabric, polyethylene, polypropylene, and polyvinylidene difluoride. The separation film may be a single-layer film or a multi-layer composite film, and there is no particular limitation on this. When the separation film is a multi-layer composite film, the materials of the layers may be the same or different, and there is no particular limitation on this.

A second aspect of the present application provides a battery. The battery includes the battery cell 100 provided in the first aspect of the present application.

The battery mentioned in the embodiments of the present application may include one or a plurality of battery cells to provide a single physical module with higher voltage and capacity. When there are a plurality of battery cells, the plurality of battery cells are connected in series, in parallel, or in series-parallel by a busbar component.

In some embodiments, the battery may be a battery module, and when there are a plurality of battery cells, the plurality of battery cells are arranged and fixed to form one battery module.

In some embodiments, the battery may be a battery pack. The battery pack includes a case and a battery cell, and the battery cell or the battery module is accommodated in the case.

Referring to FIG. 13, FIG. 13 is an exploded view of a battery 1000 in the related art. The battery 1000 includes battery cells 100 and a case 200, and the case 200 is configured to accommodate battery cells 100.

The case 200 is a component for accommodating the battery cells 100, the case 200 provides a placement space for the battery cells 100, and the case 200 may be of various structures. In some embodiments, the case 200 may include a first portion 210 and a second portion 220. The first portion 210 and the second portion 220 are mutually lidded with each other to define a placement space for accommodating the battery cells 100. The first portion 210 and the second portion 220 may be in various shapes, such as a cylindrical shape and a rectangular parallelepiped shape. The first portion 210 may be a hollow structure with one side open, the second portion 220 may also be a hollow structure with one side open, and the open side of the first portion 210 is lidded with the open side of the second portion 220 to form a case 200 having a placement space. Alternatively, the first portion 210 is a hollow structure with one side open, the second portion 220 is of a plate-shaped structure, and the open side of the first portion 210 is lidded with the second portion 220 to form a case 200 having a placement space. As an example, the battery cell 100 may be a cylindrical battery cell, a prismatic battery cell, a pouch battery cell, or a battery cell 100 of other shapes. The prismatic battery cell includes a square-housing battery cell, a blade-shaped battery cell, and a multi-prismatic battery, and the multi-prismatic battery is, e.g., a hexagonal prismatic battery. This is not particularly limited in the present application.

In the battery 1000, one or a plurality of battery cells 100 may be provided. If a plurality of battery cells 100 are provided, the plurality of battery cells 100 may be connected in series, in parallel, or in series-parallel. The series-parallel connection means that both series connection and parallel connection are present in the connection of the plurality of battery cells 100. It may be that the plurality of battery cells 100 are first connected in series, in parallel, or in series-parallel to form battery modules, and then a plurality of battery modules are connected in series, in parallel, or in series-parallel to form a whole to be accommodated in the case 200. It may also be that all the battery cells 100 are directly connected in series, in parallel, or in series-parallel, and then the whole formed by all the battery cells 100 is accommodated in the case 200.

A third aspect of the present application provides an electric device. The electric device includes the battery provided in the second aspect of the present application. The battery 1000 is configured to provide electric energy for an electric device. Thus, using the battery 1000 described above is beneficial for improving the use safety and reliability of the electric device.

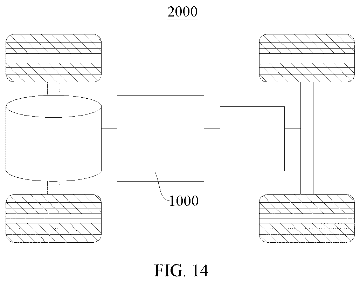

Optionally, as shown in FIG. 14, when the battery 1000 is used in a vehicle 2000, the battery 1000 may be provided at the bottom, the head, or the tail of the vehicle 2000. The battery 1000 may be configured to power the vehicle 2000. For example, the battery 1000 may serve as an operation power source of the vehicle 2000. The vehicle 2000 may further include a controller and a motor. The controller is configured to control the battery 1000 to supply power to the motor, e.g., for operation power needed for starting, navigating, and driving of the vehicle 2000.

In order to make the technical problems to be addressed, the technical solutions, and the beneficial effects of the embodiments of the present application more apparent, the present application is further described in detail below with reference to the drawings and examples. Apparently, the described examples are merely some examples of the present application, rather than all of the examples. The following description of at least one exemplary example is merely illustrative and is in no way intended to limit the present application and the application thereof. Based on the examples in the present application, all other examples obtained by those of ordinary skill in the art without creative work shall fall within the protection scope of the present application.

### Example 1

### 1) Preparation of positive electrode plate

A positive electrode active material LiNi_{0.8}Co_{0.1}Mn_{0.1}O₂, a conductive agent Super P, and a binder polyvinylidene difluoride (PVDF) were prepared into a positive electrode slurry in N-methylpyrrolidone (NMP), where the solid content of the positive electrode slurry was 80 wt%, and the mass ratio of LiNi_{0.8}Co_{0.1}Mn_{0.1}O₂, Super P, and PVDF in the solid component was 8:1:1. The upper and lower surfaces of the current collector aluminum foil were coated with the positive electrode slurry, and the aluminum foil was then dried at 85 °C, followed by cold pressing, edge trimming, plate cutting, and slitting. Drying was then performed at 85 °C for 4 h under vacuum to prepare a positive electrode plate.

### 2) Preparation of negative electrode plate

Graphite, a conductive agent Super P, a thickener carboxymethyl cellulose (CMC), and a binder styrene-butadiene rubber (SBR) were uniformly mixed in deionized water to obtain a negative electrode slurry, where the solid content of the negative electrode slurry was 50 wt%, the mass ratio of graphite, silicon(II) oxide, Super P, CMC, and the binder styrene-butadiene rubber (SBR) in the solid component was 88:7:3:2, and the mass proportion S of graphite and silicon(II) oxide in the negative electrode active material layer was 10%. The upper and lower surfaces of the current collector copper foil were coated with the negative electrode slurry, and the copper foil was then dried at 85 °C, followed by cold pressing, edge trimming, plate cutting, and slitting. Drying was then performed at 120 °C for 12 h under vacuum to prepare a negative electrode plate.

### 3) Preparation of electrolyte

In a glove box under argon atmosphere (H₂O < 0.1 ppm, O₂ < 0.1 ppm), a fully dried electrolyte salt LiPF₆ was dissolved in a mixed solvent (the mixed solvent included ethylene carbonate (EC) and diethyl carbonate (DEC), and the ethylene carbonate (EC) and the diethyl carbonate (DEC) were mixed in a mass ratio of 50:50), and the mixture was uniformly mixed to obtain a liquid electrolyte at a concentration of 1 mol/L.

### 4) Separator

A 16 µm polyethylene film was used as a separator.

### 5) Preparation of lithium-ion battery

The positive electrode plate, the separator, and the negative electrode plate were stacked in sequence, with the separator positioned between the positive electrode plate and the negative electrode plate to isolate the positive electrode and the negative electrode. The stack was wound to obtain a bare cell. The bare cell was welded to the tabs and placed in an aluminum housing, and the electrolyte prepared above was injected into the dried housing. After procedures including packaging, standing, formation, shaping, capacity testing, etc., the preparation of a lithium-ion battery was completed (the thickness of the lithium-ion battery was 31 mm, the width was 237.5 mm, and the length was 117.4 mm). After the preparation was completed, in the second direction, the minimum distance D between the pressure relief mechanism and the edge of the negative electrode active material layer was 1 mm; in the first direction, the edge of the pressure relief mechanism was spaced at a distance d from both the outer surface of the second wall part and the outer surface of the third wall part, where d is 10 mm.

The preparation methods for the batteries in Examples 2-14 and Comparative Examples 1-5 are the same as those in Example 1, and the differences are detailed in Table 1.

**Table 1**

| | D/mm | S/% | d/mm | D/S | D×d |
|---|---|---|---|---|---|
| Comparative Example 1 | 0.5 | 10 | 10 | 5.00 | 5.00 |
| Example 1 | 3 | 10 | 10 | 30.00 | 30.00 |
| Example 2 | 5 | 10 | 10 | 50.00 | 50.00 |
| Example 3 | 8 | 10 | 10 | 80.00 | 80.00 |
| Example 4 | 10 | 10 | 10 | 100.00 | 100.00 |
| Example 5 | 15 | 10 | 10 | 150.00 | 150.00 |
| Comparative Example 2 | 20 | 10 | 10 | 200.00 | 200.00 |
| Comparative Example 3 | 5 | 40 | 10 | 12.50 | 50.00 |
| Example 6 | 5 | 25 | 10 | 20.00 | 50.00 |
| Example 7 | 5 | 20 | 10 | 25.00 | 50.00 |
| Example 8 | 5 | 15 | 10 | 33.33 | 50.00 |
| Example 9 | 5 | 5 | 10 | 100.00 | 50.00 |
| Example 10 | 5 | 0.5 | 10 | 1000.00 | 50.00 |
| Comparative Example 4 | 5 | 0.3 | 10 | 1666.67 | 50.00 |
| Comparative Example 5 | 5 | 10 | 2 | 50.00 | 10.00 |
| Example 11 | 5 | 10 | 3 | 50.00 | 15.00 |
| Example 12 | 5 | 10 | 5 | 50.00 | 25.00 |
| Example 13 | 5 | 10 | 15 | 50.00 | 75.00 |
| Example 14 | 5 | 10 | 20 | 50.00 | 100.00 |

### Performance Testing

### 1. Test method for determining whether an anti-explosion valve cracks

At 45 °C, a battery was charged and discharged at a constant current of 0.33C, and the state of the anti-explosion valve was checked every 50 cycles to observe whether the anti-explosion valve cracked and leaked liquid.

### 2. Test method for energy density

At 25 °C, a battery was charged and discharged at a constant current of 0.33C, and the charging and discharging tests were performed within 2.8 V to 4.25 V to obtain the capacity of the battery. The capacity was divided by the dimension (length, width, and height) of the battery to obtain the energy density in Wh/L.

The test results of the batteries in Examples 1-14 and Comparative Examples 1-5 are shown in Table 2.

**Table 2**

| | Whether the anti-explosion valve cracks | Energy density/Wh/L |
|---|---|---|
| Comparative Example 1 | Crack | 700 |
| Example 1 | Not crack | 682 |
| Example 2 | Not crack | 665 |
| Example 3 | Not crack | 644 |
| Example 4 | Not crack | 630 |
| Example 5 | Not crack | 595 |
| Comparative Example 2 | Not crack | 560 |
| Comparative Example 3 | Crack | 755 |
| Example 6 | Not crack | 735 |
| Example 7 | Not crack | 720 |
| Example 8 | Not crack | 700 |
| Example 9 | Not crack | 664 |
| Example 10 | Not crack | 655 |
| Comparative Example 4 | Not crack | 652 |
| Comparative Example 5 | Crack | 665 |
| Example 11 | Not crack | 665 |
| Example 12 | Not crack | 665 |
| Example 13 | Not crack | 665 |
| Example 14 | Not crack | 665 |

As can be seen from Table 2, in the present application, by allowing the values of D, S, and d to meet the following conditions simultaneously: 3 mm ≤ D ≤ 15 mm, 0.5% ≤ S ≤ 30%, and 3 mm ≤ d ≤ 20 mm, the energy density of the battery can be increased, and at the same time, the probability of tension-induced rupture at the pressure relief mechanism can be reduced, thereby reducing the probability of liquid leakage at the pressure relief mechanism and improving the reliability of the battery cell.

Finally, it should be noted that the above examples are only used to illustrate the technical solutions of the present application, rather than limit same. Although the present application has been described in detail with reference to the foregoing examples, those of ordinary skill in the art should understand that modifications can still be made to the technical solutions recorded in the foregoing examples, or equivalent substitutions to some or all of the technical features can be made. However, such modifications or substitutions do not make the spirit of the corresponding technical solutions deviate from the scope of the technical solutions in the examples of the present application, and shall all fall within the scope of claims and specification of the present application. In particular, the technical features mentioned in the examples can be combined in any manner, provided that there is no structural conflict. The present application is not limited to the specific examples disclosed herein but includes all the technical solutions that fall within the scope of the claims.

## Claims

1. A battery cell, comprising:
a housing comprising a first wall part, a second wall part, and a third wall part, wherein the second wall part and the third wall part are arranged opposite to each other in a first direction, and two ends of the first wall part in the first direction are respectively connected to the second wall part and the third wall part;
a pressure relief mechanism arranged on the first wall part and configured to be able to relieve pressure inside the battery cell; and
an electrode assembly accommodated in the housing, wherein the electrode assembly comprises at least one negative electrode plate, an active material layer is formed on at least one side of the negative electrode plate, the active material layer comprises an active material, and in a second direction, the first wall part is arranged facing an edge of the negative electrode plate, and the second direction is a thickness direction of the first wall part and is perpendicular to the first direction; wherein
in the second direction, a minimum distance between the pressure relief mechanism and an edge of the active material layer is D, and 3 mm ≤ D ≤ 15 mm;
based on a total mass of the active material layer, a mass proportion of the active material is S, and 0.5% ≤ S ≤ 25%;
in the first direction, a minimum distance between an edge of the pressure relief mechanism and an outer surface of the second wall part or an outer surface of the third wall part is d, and 3 mm ≤ d ≤ 20 mm.

2. The battery cell according to claim 1, wherein 3 mm ≤ D ≤ 10 mm, and 5% ≤ S ≤ 15%.

3. The battery cell according to claim 2, wherein D/S > 20 mm.

4. The battery cell according to claim 1, wherein 2 mm ≤ D ≤ 10 mm, and 5 mm ≤ d ≤ 15 mm.

5. The battery cell according to claim 4, wherein 10 mm² ≤ D × d ≤ 150 mm².

6. The battery cell according to any one of claims 1-5, wherein the active material comprises an expandable element, and the expandable element comprises at least one of silicon or graphite.

7. The battery cell according to any one of claims 1-6, wherein the pressure relief mechanism is integrally formed with the first wall part.

8. The battery cell according to claim 7, wherein the first wall part comprises a weakened zone and a non-weakened zone, the weakened zone is arranged along the edge of the pressure relief mechanism and connects the pressure relief mechanism and the non-weakened zone, and the weakened zone is configured to crack when pressure of the battery cell is relieved.

9. The battery cell according to claim 8, wherein the first wall part is provided with a score groove, and the weakened zone is formed in the first wall part at an area where the score groove is provided.

10. The battery cell according to claim 9, wherein the score groove is a groove extending along a closed trajectory.

11. The battery cell according to any one of claims 1-6, wherein the pressure relief mechanism is arranged separately from the first wall part, the first wall part is provided with a through hole, and the pressure relief mechanism is mounted in the through hole.

12. The battery cell according to any one of claims 1-11, wherein in the first direction, a thickness of the battery cell is W₁, a width of the pressure relief mechanism is W₂, and the following condition is satisfied: 0.2 ≤ W₂/W₁ ≤ 0.5.

13. The battery cell according to any one of claims 1-12, wherein in the first direction, the width of the pressure relief mechanism is W₂; in a third direction, a length of the pressure relief mechanism is W₃, and the following condition is satisfied: 0.5 ≤ W₂/W₃ ≤ 0.8, wherein the third direction is perpendicular to the second direction.

14. The battery cell according to any one of claims 1-13, wherein the housing further comprises a fourth wall part; the first wall part, the second wall part, the fourth wall part, and the third wall part are connected end to end in sequence, and the fourth wall part and the first wall part are arranged opposite to each other in the second direction.

15. The battery cell according to claim 14, wherein in the second direction, a distance between the first wall part and the fourth wall part is L₁; in the first direction, a distance between the second wall part and the third wall part is L₂, and the following condition is satisfied: L₁ > L₂.

16. The battery cell according to any one of claims 1-15, wherein the electrode assembly further comprises at least one positive electrode plate, a polarity of the positive electrode plate is opposite to that of the negative electrode plate, and the positive electrode plate and the negative electrode plate are arranged in a stacked manner.

17. The battery cell according to any one of claims 1-15, wherein the electrode assembly further comprises at least one positive electrode plate, a polarity of the positive electrode plate is opposite to that of the negative electrode plate, and the positive electrode plate and the negative electrode plate are arranged in a winding manner.

18. The battery cell according to any one of claims 1-17, wherein the housing comprises a housing body and an end cover, at least one side of the housing body is provided with an opening, the end cover is connected to the housing body and is configured to close the opening, and the first wall part is formed in the housing body.

19. The battery cell according to claim 18, wherein two opposite sides of the housing body are each provided with an opening, and two end covers are configured to close the openings on corresponding sides.

20. The battery cell according to claim 18 or 19, wherein the end cover is provided with an electrical connection part, and the electrical connection part is electrically connected to the positive electrode plate, or the electrical connection part is electrically connected to the negative electrode plate.

21. The battery cell according to claims 1-20, wherein the first wall part is configured to support the electrode assembly and is located below the electrode assembly.

22. The battery cell according to any one of claims 1-21, wherein a material of the housing comprises at least one of aluminum, nickel-plated carbon steel, stainless steel, a magnesium alloy, a nickel alloy, a copper alloy, and a zirconium alloy.

23. The battery cell according to any one of claims 16-22, wherein the positive electrode plate comprises a positive electrode current collector and a positive electrode active substance zone arranged on a surface of the positive electrode current collector, and a constituent material of the positive electrode current collector comprises an aluminum element with a mass percentage greater than or equal to 50%.

24. A battery, comprising the battery cell according to any one of claims 1-23.

25. An electric device, comprising the battery according to claim 24.
